(19) Europäisches Patentamt
European Patent Office
Office européen des brevets

(11) Publication number: **0 305 054 B1**

(12) **EUROPEAN PATENT SPECIFICATION**

(45) Date of publication of patent specification: **30.03.94**

(51) Int. Cl.⁵: **G11B 7/24**, C07C 211/00, C07C 251/00

(21) Application number: **88306970.0**

(22) Date of filing: **28.07.88**

The file contains technical information submitted after the application was filed and not included in this specification

(54) **IR-ray absorptive compound and optical recording medium by use thereof.**

(30) Priority: **28.07.87 JP 189393/87**
**04.08.87 JP 194597/87**

(43) Date of publication of application:
**01.03.89 Bulletin 89/09**

(45) Publication of the grant of the patent:
**30.03.94 Bulletin 94/13**

(84) Designated Contracting States:
**DE FR GB**

(56) References cited:
**DE-A- 3 503 995**
**DE-A- 3 537 539**
**JP-A-62 050 187**
**US-A- 3 484 467**
**US-A- 3 670 025**

(73) Proprietor: **CANON KABUSHIKI KAISHA**
**30-2, 3-chome, Shimomaruko,**
**Ohta-ku**
**Tokyo(JP)**

(72) Inventor: **Fukui, Tetsuro**
**1458-4, Kajigaya**
**Miyamae-ku**
**Kawasaki-shi Kanagawa-ken(JP)**
Inventor: **Oguchi, Yoshihiro**
**No. 201 Sukaigurin**
**16-1, Idasanmai-cho**
**Nakahara-ku Kawasaki-shi**
**Kanagawa-ken(JP)**
Inventor: **Sugata, Hiroyuki**
**6-1-215, Nishi Tsuruma 3-chome**
**Yamato-shi Kanagawa-ken(JP)**
Inventor: **Miura, Kyo**
**8-5, Gurinterasu Hongodai**
**774-5, Kuden-cho**
**Sakae-ku Yokohama-shi Kanagawa-ken(JP)**

(74) Representative: **Beresford, Keith Denis Lewis et al**
**BERESFORD & Co.**
**2-5 Warwick Court**
**High Holborn**
**London WC1R 5DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to infrared absorptive compounds, to an optical recording medium containing the compounds and to optical recording and reproducing methods in which use is made of the compound. The optical recording medium may be in the form of an optical disc or optical card, which can exhibit improved light resistance and hence improved durability when used for repeated reproduction.

Generally speaking, an optical recording medium such as an optical disc or optical card can record information at high density. A substrate having a spiral, circular, or linear groove on it is provided with a thin recording layer in which information can be recorded as optically detectable small pits having, for example, a size of 1 μm. Information can be written onto the recording layer by providing a laser beam which is converged at the surface of the recording layer, scanning the laser beam over the layer and causing the recording layer to absorb the laser energy to form the optically detectable pits. For example in a heat mode recording system, the recording layer absorbs heat energy and can form a small pit (concave portion) through evaporation or melting at that site. In this invention, where a highly reflective thin film of an organic dye is used as the recording layer, a high level of optical contrast at the recording pits can be obtained. For example when the dye used is a polymethine type dye, azulene dye, a cyanine dye or a pyrilium type dye, there can be obtained a reflective film which exhibits metallic luster (reflectance 10 to 50%) and which is a good absorber of the light from the laser beam so that there can be obtained an optical recording medium capable of laser recording and reflective reading. Where the laser light source is a semiconductor laser having an oscillation wavelength of 700 to 800 nm, there is the advantage that the device can be made smaller and of lower cost. However, organic dye thin films suffer from the problem of relatively poor recording and reproduction characteristics because changes in them can take place by the action of heat and light.

In an attempt to solve this problem, US patent 4656121 has already disclosed that the light resistance of the film can be improved by incorporating an aminium salt or diimonium salt of a triarylamine type compound incorporated in a polymethine type dye.

In one aspect the invention provides an infra-red ray absorptive compound represented by the formula (1) or (2):

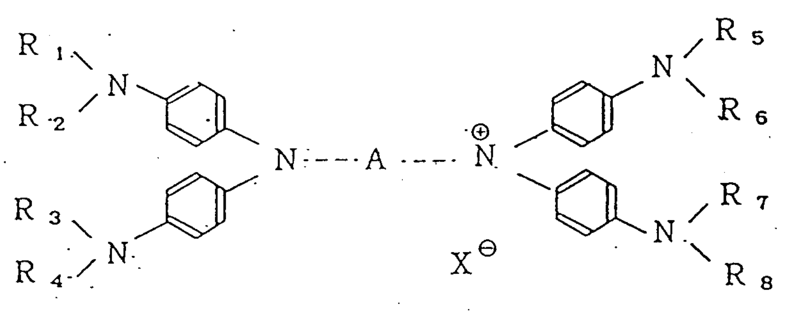

(1)

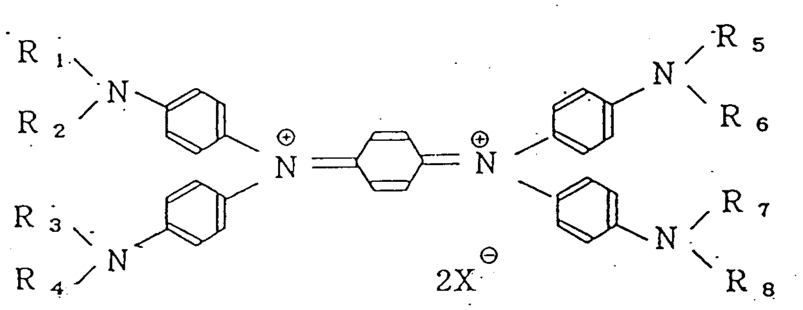

(2)

wherein: A represents

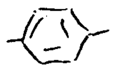

or

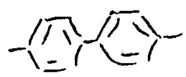

which may have halogen or alkyl or alkoxy groups as substituents;
$X^-$ represents an anion; and
$R_1$ - $R_8$ are substituents having one to eight carbon atoms, subject to the proviso that either (a) at least one of $R_1$ - $R_8$ is an alkoxyalkyl or an alkynyl group, or (b) at least one combination of $R_1$ and $R_2$, $R_3$ and $R_4$, $R_5$ and $R_6$ or $R_7$ and $R_8$ together with the nitrogen atom to which they are attached represent a substituted or unsubstituted pyrrolidine piperidine, morpholine, tetrahydropyridine or

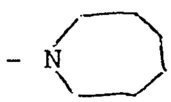

ring and other substituents are straight or branched alkyl groups.

In a second aspect the invention provides an optical recording medium comprising a substrate and an organic dye thin film on the substrate, in which film there is present an infra-red absorptive compound represented by the formula (1') or (2'):

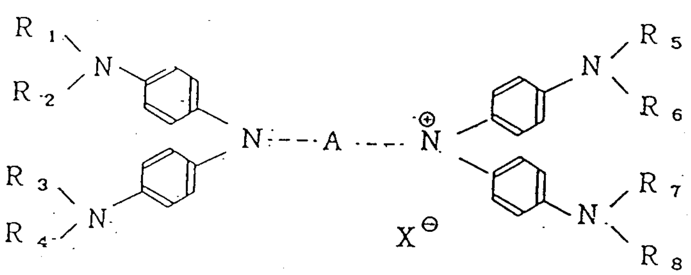

(1')

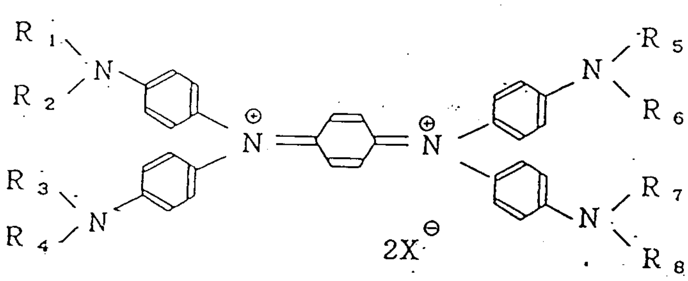

(2')

wherein: A represents

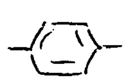

or

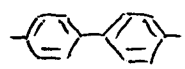

which may have halogen or alkyl or alkoxy groups as substituents;

$X^-$ represents an anion; and

$R_1$ - $R_8$ are substituents having one to eight carbon atoms, subject to the proviso that either (a) at least one of $R_1$ - $R_8$ is an alkoxyalkyl, alkenyl or an alkynyl group, or (b) at least one combination of $R_1$ and $R_2$, $R_3$ and $R_4$, $R_5$ and $R_6$ or $R_7$ and $R_8$ together with the nitrogen atom to which they are attached represent a substituted or unsubstituted pyrrolidine, piperidine, morpholine, tetrahydropyridine or

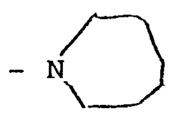

ring and other substituents are straight or branched alkyl groups.

In a further aspect there is provided an optical recording method which comprises irradiating an optical recording medium comprising a substrate and an organic dye thin film with a laser beam to form pits on said organic dye thin film, characterised in that the organic dye thin film contains a compound of the formula (1') and/or (2') as aforesaid.

In a further aspect the invention provides an optical reproducing method which comprises illuminating an optical recording medium comprising a substrate and an organic dye thin film with a laser beam to read out information recorded on said organic dye thin film in the form of optically detectable pits by detecting optical variation of reflected light of said laser beam from said organic dye thin film, characterised in that the organic dye thin film contains a compound of the formula (1') and/or (2') as aforesaid.

Japanese specification 62-50187 (Chem. Abs. 107:226046j), DE-A-3537539 and DE-A-3503995 disclose as materials for laser recording media aminium or diimonium salt compounds in which the substituents on the nitrogen atoms are alkyl groups. US-A-3484467 and 3670025 disclose other aminium and diimonium salt compounds, but not in the context of optical recording media in which a thin organic dye film on a substrate has information written to it or information recovered from it by means of a laser. There is no disclosure that any particular combination of substituents could give rise to improved resistance to light, particularly under the conditions used in a laser optical recording device.

In the above formula (1) or (2), the aromatic ring at the center may be substituted with a lower alkyl group or a halogen atom.

$X^{\ominus}$ represents an anion such as chloride, bromide, iodide, perchlorate, nitrate, benzenesulfonate, p-toluenesulfonate, methylsulfate, ethylsulfate, propylsulfate, tetrafluoroborate, tetraphenylborate, hexafluorophosphate, benzenesulfinate, acetate, trifluoroacetate, propionacetate, benzoate, oxalate, succinate, malonate, oleate, stearate, citrate, monohydrogen diphosphate, dihydrogen monophosphate, pentachlorostannate, chlorosulfonate, fluorosulfonate, trifluoromethansulfonate, hexafluoroarsenate, hexafluoroantimonate, molybdenate, tungustate, titanate, zirconate ions, etc.

The compound of the present invention can be produced by utilizing the methods disclosed in U.S. Patents 3,251,881, 3,575,871, 3,484,467 and Japanese Patent Laid-open Application No. 61-69991. For example, it can be produced according to the following process.

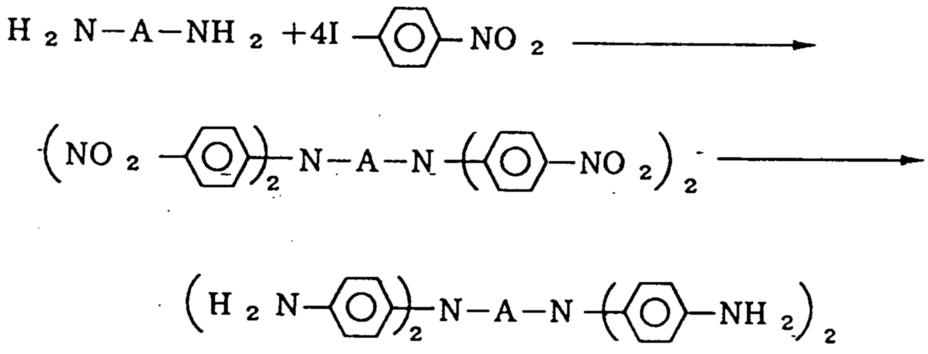

The amino derivative obtained by the above Ulman reaction and reduction reaction can be alkylated, alkenylated or alkynylated by selective substitution, followed by oxidation reaction to obtain the final product.

In this reaction, for obtaining pyrrolidine ring, piperidine ring, morpholine ring, tetrahydropyridine ring, etc. a suitable alkylating agent in the alkylation reaction may be used.

For example, for formation of pyrrolidine ring, it can be formed by alkylation with 1,4-dibromobutane, 1,4-dichlorobutane, 1,4-diiodobutane, etc., and for piperidine ring, 1,5-dibromopentane, 1,5-dichloropentane, 1,5-diiodopentane, etc. are employed. For morpholine ring, after effecting first hydroxyethylation with 2-bromoethanol, a morpholine ring can be formed by dehydration by acid treatment, and tetrahydropyridine ring can be cyclized with acid treatment after methacrylation with methacryl bromide, etc. Cyclohexylamine ring may be cyclized with 1,6-dibromohexane, etc.

Particularly, cyclization of amino group can proceed more rapidly as compared with alkylation to give also good yield, and has advantages in production as compared with propyl derivative or butyl derivative of the prior art.

Also, the IR-ray absorptive compound having alkoxyl group, alkenyl group or alkynyl group in the structure according to the present invention has excellent solubility in solvents. This may be considered to be due to polarity of alkoxyl, alkenyl or alkynyl group.

Examples of the alkoxyalkyl group may include straight or branched alkoxyalkyls such as methoxymethyl, 2-methoxyethyl, 3-methoxypropyl, 2-methoxypropyl, 4-methoxybutyl, 3-methoxybutyl, 2-methoxybutyl, 5-methoxypentyl, 4-methoxypentyl, 3-methoxypentyl, 2-methoxypentyl, 6-methoxyhexyl, ethoxymethyl, 2-ethoxyethyl, 3-ethoxypropyl, 2-ethoxypropyl, 4-ethoxybutyl, 3-ethoxybutyl, 5-ethoxypentyl, 4-ethoxypentyl, 6-ethoxyhexyl, propoxymethyl, 2-propoxyethyl, 3-propoxypropyl, 4-propoxybutyl, 5-propoxypentyl and the like.

Examples of the alkenyl group may include straight or branched alkenyls such as allyl, butenyl, pentenyl, hexenyl, heptenyl, octenyl, methacryl, pentadienyl, hexadienyl and the like.

Examples of the alkynyl group may include propargyl, 3-butynyl, 4-pentynyl, 5-hexynyl and the like.

Next, specific examples of the compounds used in the formula (1) and (2) are shown. For simplification, the compound represented by the formula (1) is represented by $A,X,(R_1R_2)(R_3R_4)(R_5R_6)(R_7R_8)$ and the compound represented by the formula (2) by $X,(R_1R_2)(R_3R_4)(R_5R_6)(R_7R_8)$. For example, when in the formula (1), A is

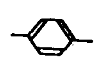 ,

$X^\ominus$ is $ClO_4^\ominus$ and $R_1$ is $CH_2CH_2OCH_3$, and $R_2$ through $R_8$ are $C_3H_7$, the compound is written as:

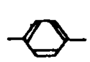 ,

$C\ell O_4$, $(C_3H_7C_3H_7)_3(C_3H_7CH_2CH_2OCH_3)$

In the formula (2), when $X^\ominus$ is $ClO_4^\ominus$, $R_1$ through $R_8$ are metoxyethyl group, the compound is written as: $C\ell O_4$, $(CH_2CH_2OCH_3CH_2CH_2OCH_3)_4$

Also, when in the formula (1), A is

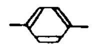 ,

$X^{\ominus}$ is $ClO_4^{\ominus}$ and $R_1$ through $R_8$ form 2-methylpyrrolidine ring, the compound is written as:

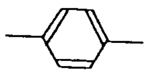 , $C\ell O_4$, $(\overset{CH_3}{\overset{|}{C}}HCH_2CH_2CH_2)_4$

In the formula (2), when $X^{\ominus}$ is $AsF_6^{\ominus}$, $R_1$ and $R_2$ form piperidine ring, and $R_3$ through $R_8$ are n-butyl group, the compound is written as:

$AsF_6$ ,$(C_4H_9C_4H_9)_3(CH_2CH_2CH_2CH_2CH_2)$

**Compound No.**

1 − 1 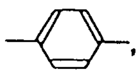, $C\ell O_4$, $(C_3H_7C_3H_7)_3$ $(C_3H_7CH_2CH_2OCH_3)$

1 − 2 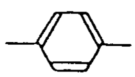, $C\ell O_4$, $(C_4H_9C_4H_9)_3$ $(C_4H_9CH_2CH_2OCH_3)$

1 − 3 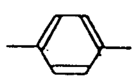, $C\ell O_4$, $(C_5H_{11}C_5H_{11})_3$ $(C_5H_{11}CH_2CH_2OCH_3)$

1 − 4 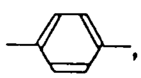, $C\ell O_4$, $(CH_2CH_2OCH_3,CH_2CH_2OCH_3)_4$

1 − 5 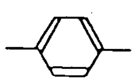, $AsF_6$ , $(C_3H_7C_3H_7)_3$ $(C_3H_7CH_2CH_2OCH_3)$

1 − 6 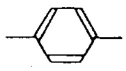 , $AsF_6$ , $(C_4H_9C_4H_9)_3$ $(C_4H_9CH_2CH_2OCH_3)$

1 − 7 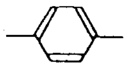 , $BF_4$ , $(CH_2CH_2OCH_3CH_2CH_2OCH_3)_4$

1 − 8 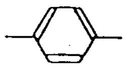 , $C\ell O_4$, $(C_3H_7C_3H_7)_3$ $(C_3H_7CH_2CH_2OC_2H_5)$

1 − 9 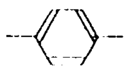 $C\ell O_4$ , $(C_4H_9C_4H_9)_3(C_4H_9CH_2CH_2OC_2H_5)$

1 − 10 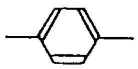 , $C\ell O_4$,$(CH_2CH_2OC_2H_5\ CH_2CH_2OC_2H_5)_4$

1 − 11 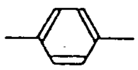 , $AsF_6$,$(CH_2CH_2OC_2H_5\ CH_2CH_2OC_2H_5)_4$

1 − 12 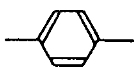 , $C\ell O_4$, $(C_4H_9C_4H_9)_3$ $(C_4H_9CH_2CH{=}CH_2)$

1 − 13 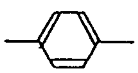 , $C\ell O_4$, $(CH_2CH{=}CH_2\ CH_2CH{=}CH_2)_4$

1 − 14 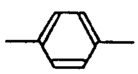 , $AsF_6$, $(CH_2CH{=}CH_2\ CH_2CH{=}CH_2)_4$

$CH_3$

1 − 15 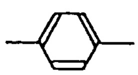 , $C\ell O_4$, $(C_3H_7C_3H_7)_3$ $(C_3H_7CH_2C{=}CH_2)$

$CH_3$

1 − 16 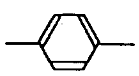 , $C\ell O_4$, $(C_4H_9C_4H_9)_3$ $(C_4H_9CH_2C{=}CH_2)$

$CH_3$

1 − 17 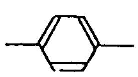 , $AsF_6$, $(C_3H_7C_3H_7)_3$ $(C_3H_7CH_2C{=}CH_2)$

1−18 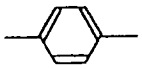 , $AsF_6$, $(C_4H_9C_4H_9)_3(C_4H_9CH_2\overset{CH_3}{\overset{|}{C}}=CH_2)$

1−19 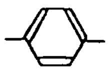 , $C\ell O_4$, $(C_4H_9C_4H_9)_3(C_4H_9CH_2C\equiv CH)$

1−20 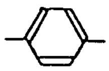 , $AsF_6$, $(CH_2CH_2CH=CH_2CH_2CH_2CH=CH_2)_4$

1−21 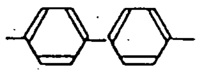 , $C\ell O_4$, $(CH_2CH_2OCH_3CH_2CH_2OCH_3)_4$

1−22 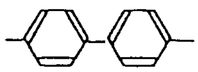 , $AsF_6$, $(CH_2CH_2OCH_3CH_2CH_2OCH_3)_4$

1−23 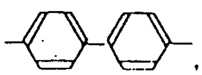 , $C\ell O_4$, $(CH_2CH_2OC_2H_5CH_2CH_2OC_2H_5)_4$

1−24 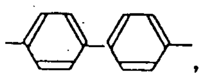 , $C\ell O_4$, $(C_4H_9C_4H_9)_3(C_4H_9CH_2CH_2OC_2H_5)$

1−25 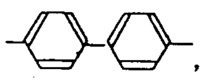 , $C\ell O_4$, $(C_4H_9C_4H_9)_3(C_4H_9CH_2CH=CH_2)$

1−26 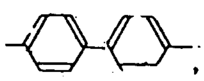 , $AsF_6$, $(C_4H_9C_4H_9)_3(C_4H_9CH_2CH_2OC_2H_5)$

1-27 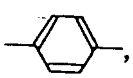 , $C\ell O_4$, $(C_4H_9C_4H_9)_3$ $(CH_2CH_2CH_2CH_2)$

1−28

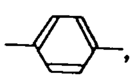 , $C\ell O_4$, $(C_3H_7C_3H_7)_3$ $(CH_2CH_2CH_2CH_2)$

1 −29

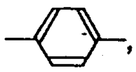 , $C\ell O_4$, $(CH_2CH_2CH_2CH_2)_4$

1 −30

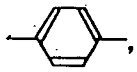 , $C\ell O_4$, $(C_4H_9C_4H_9)_3$ $(CH_2CH_2CH_2CH_2CH_2)$

1 − 31

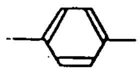 , $C\ell O_4$, $(CH_2CH_2CH_2CH_2CH_2)_4$

1 −32

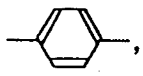 , $C\ell O_4$, $(CH_2CH_2OCH_2CH_2)_4$

1 −33

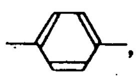 , $C\ell O_4$, $(CH{=}C(CH_3)CH_2C(CH_3)_2CH_2)_4$

1 −34

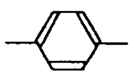 , $AsF_6$, $(C_4H_9C_4H_9)_3$ $(CH_2CH_2CH_2CH_2)$

1 − 35

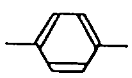 , $AsF_6$, $(CH_2CH_2CH_2CH_2)_4$

1 − 36

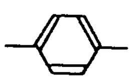 , $AsF_6$, $(CH_2CH_2CH_2CH_2CH_2)_4$

1 − 37

$CH_3$
|
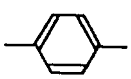 , $C\ell O_4$, $(CHCH_2CH_2CH_2)_4$

1 − 38

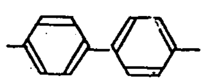 , $C\ell O_4$, $(C_4H_9C_4H_9)_3$ $(CH_2CH_2CH_2CH_2)$

1 − 39

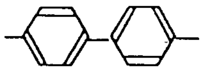 , $O_4$, $(CH_2CH_2CH_2CH_2CH_2)_4$

1 − 40

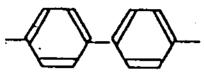, $C\ell O_4$, $(CH_2CH_2CH_2CH_2)_4$

1 − 41

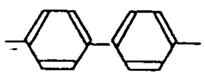 , $C\ell O_4$, $(CH_2CH_2OCH_2CH_2)_4$

1 − 42

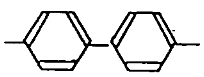 , $AsF_6$ , $(CH_2CH_2CH_2CH_2CH_2)_4$

1 − 43

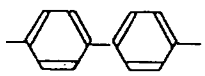 , $BF_4$ , $(CH_2CH_2CH_2CH_2CH_2)_4$

1 − 44

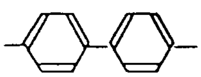 , $C\ell O_4$, $(\overset{CH_3}{\overset{|}{C}}HCH_2CH_2CH_2)_4$

1 − 45

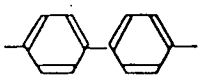 , $C\ell O_4$, $(CH{=}C(CH_3)CH_2C(CH_3)_2CH_2)_4$

1 − 46

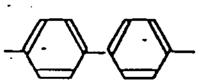 , $C\ell O_4$, $(C_6H_{13}C_6H_{13})_3$ $(CH_2CH_2CH_2CH_2)$

1 − 47

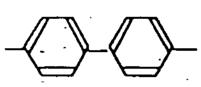 , $C\ell O_4$, $(CH_2CH_2CH_2CH_2CH_2CH_2)_4$

2- 1 $C\ell O_4$, $(CH_2CH_2OCH_3CH_2CH_2OCH_3)_4$

2- 2 $C\ell O_4$, $(C_4H_9C_4H_9)_3(C_4H_9CH_2CH_2OCH_3)$

2- 3 $C\ell O_4$, $(C_5H_{11}C_5H_{11})_3(C_5H_{11}CH_2CH_2OCH_3)$

2- 4 $C\ell O_4$, $(C_3H_7C_3H_7)_3(C_3H_7CH_2CH_2OC_2H_5)$

2- 5 $C\ell O_4$, $(CH_2CH_2C_2H_5CH_2CH_2OC_2H_5)_4$

2- 6 $AsF_6$, $(C_4H_9C_4H_9)_3(C_4H_9CH_2CH_2OCH_3)$

2- 7 $AsF_6$, $(C_3H_7C_3H_7)_3(C_3H_7CH_2CH_2OC_2H_5)$

2- 8 $AsF_6$, $(CH_2CH_2OC_2H_5CH_2CH_2OC_2H_5)_4$

2- 9 $C\ell O_4$, $(C_4H_9C_4H_9)_3(C_4H_9CH_2CH{=}CH_2)$

2-10 $C\ell O_4$, $(CH_2CH{=}CH_2CH_2CH{=}CH_2)_4$

2-11 $AsF_6$, $(C_4H_9C_4H_9)_3(C_4H_9CH_2CH{=}CH_2)$

2-12 $AsF_6$, $(C_6H_{13}C_6H_{13})_3(C_6H_{13}CH_2CH{=}CH_2)$

2-13 $AsF_6$, $(CH_2CH{=}CH_2CH_2CH{=}CH_2)_4$

2-14 $BF_4$, $(C_4H_9C_4H_9)_3(C_4H_9CH_2CH{=}CH_2)$

$CH_3$

2-15 $C\ell O_4$, $(C_3H_7C_3H_7)_3(C_3H_7CH_2C{=}CH_2)$

$CH_3$

2-16 $AsF_6$, $(C_3H_7C_3H_7)_3(C_3H_7CH_2C{=}CH_2)$

2-17 $C\ell O_4$, $(C_4H_9C_4H_9)_3(C_4H_9CH_2C{\equiv}CH)$

2-18 $AsF_6$, $(C_4H_9C_4H_9)_3(C_4H_9CH_2C{\equiv}CH)$

2-19 $C\ell O_4$, $(CH_2C{\equiv}CHCH_2C{\equiv}CH)_4$

2-20 $C\ell O_4$, $(CH_2CH_2CH{=}CH_2CH_2CH_2CH{=}CH_2)_4$

2- 21 $C\ell O_4$, $(C_4H_9C_4H_9)_3(CH_2CH_2CH_2CH_2)$

2- 22 $C\ell O_4$, $(CH_2CH_2CH_2CH_2)_4$

2- 23 $C\ell O_4$, $(C_5H_{11}C_5H_{11})_3(CH_2CH_2CH_2CH_2)$

2- 24 $C\ell O_4$, $(C_4H_9C_4H_9)_3$ $(CH_2CH_2CH_2CH_2CH_2)$

2- 25 $C\ell O_4$, $(CH_2CH_2CH_2CH_2CH_2)_4$

2- 26 $C\ell O_4$, $(CH_2CH_2OCH_2CH_2)_4$

2- 27 $C\ell O_4$, $(CH(CH_3)CH_2CH_2CH_2)_4$

2-28 $C\ell O_4$, $(CH{=}C(CH_3)CH_2C(CH_3)_2CH_2)_4$

2-29 $BF_4$, $(CH_2CH_2CH_2CH_2CH_2)_4$

2-30 $BF_4$, $(C_4H_9C_4H_9)_3$ $(CH_2CH_2CH_2CH_2CH_2)$

2-31 $AsF_6$, $(CH_2CH_2CH_2CH_2)_4$

2- 32 $AsF_6$, $(CH_2CH_2CH_2CH_2CH_2)_4$

2- 33 $AsF_6$, $(C_4H_9C_4H_9)_3(CH_2CH_2CH_2CH_2)_4$

2-34 $SbF_6$, $(CH_2CH_2CH_2CH_2)_4$

Such aminium salt compounds and diimonium compounds have maximum asbsorption wavelengths at 900 nm or longer, and also great absorption peaks with absorption coefficients being about some 10,000 to 100,000 and some 10,000.

Such compounds can be used for heat insulating films, sunglasses, etc. other than uses as materials for optical recording medium.

As the near infrared-ray absorptive dye to be used with these compounds in the recording medium, there may be included dyes generally known in the art, such as cyanine type dyes, melocyanine type dyes, croconium type dyes, squarilium type dyes, azulenium type dyes, polymethine type dyes, naphthoquinone type dyes, pyrilium type dyes, phthalocyanine type dyes, etc.

The amount of the aminium salt compound of the above formula (1) or the diimonium compound of the formula (2) added relative to these dyes should be suitably 1 to 60% by weight, preferably 5 to 40% by weight, more preferably 10 to 30% by weight based on the total solids in the recording layer.

Other than these compounds, a binder may be also incorporated in the recording layer. Examples of binder may include cellulose esters such as nitrocellulose, cellulose phosphate, cellulose sulfate, cellulose acetate, cellulose propionate, cellulose lactate, cellulose myristate, cellulose palmitate, cellulose acetate•propionate, cellulose acetate butyrate, etc.; cellulose ethers such as methyl cellulose, ethyl cellulose, propyl cellulose, butyl cellulose, etc.; vinyl resins such as polystyrene, polyvinyl chloride, polyvinyl butyral, polyvinyl acetal, polyvinyl alcohol, polyvinyl pyrrolidone, etc.; copolymer resins such as styrene-butadiene copolymer, styrene-acrylonitrile copolymer, styrene-butadiene-acrylonitrile copolymer, vinyl chloride-vinyl acetate copolymer; acrylic resins such as polymethyl methacrylate, polymethylacrylate, polybutyl acrylate, polyacrylic acid, polymethacrylic acid, polyacrylamide, polyacrylonitrile, etc.; polyesters such as polyethylene terephthalate, etc.; polyarylate resins such as poly(4,4′-isopropylidenediphenylene-co-1,4-cyclohexylenedimethylenecarbonate), poly(ethylenedioxy-3,3′-phenylenethiocarbonate), poly(4,4′-isopropylidenediphenylenecarbonate-co-terephthalate poly(4,4′-isopropylidenediphenylenecarbonate), poly-(4,4′-secbutylidenediphenylenecarbonae), poly(4,4′-isopropylidenediphenylenecarbonate-block-oxyethylene)-,etc; or polyamides; polyimides; epoxy resins; phenol resins; polyolefins such as polyethylene, polypropylene, chlorinated polyethylene, etc.

Also, in the recording layer, surfactants, antistatic agents, stabilizers, dispersing agents, flame retardants, lubricants, plasticizers, etc. may be also incorporated.

Also, between the recording layer and the substrate, a subbing layer may be provided and on the recording layer, a protective layer may be provided.

The subbing layer is provided for imparting solvent resistance, improvement of reflectance or improvement of repeated reproduction, and the protective layer used for protection against flaw, dust, contamination and environmental stability of the recording layer. The materials used for these materials may include primarily inorganic compounds, metals or organic polymeric compounds. Examples of inorganic compounds may include $SiO_2$, $MgF_2$, SiO, $TiO_2$, ZnO, Tin, SiN, etc.; examples of metals Zn, Cu, Ni, Al, Cr, Ge, Se, Cd, etc.; and examples of organic polymeric compounds ionomer resins, polyamide type resins, vinyl resins, natural polymers, epoxy resins, silane couplng agents, etc.

As the substrate, plastics such as polyester, polycarbonate, acrylic resin, polyolefin resin, phenol resin, epoxy resin, polyamide, polyimide, etc., glasses or metals can be used.

The organic solvent which can be used during coating may differ depending on whether the coating liquid is made a dispersion or a solution, but may generally include alcohols such as methanol, ethanol, isopropanol, diacetone alcohol, etc.; ketones such as acetone, methyl ethyl ketone, cyclohexanone, etc.; amides such as N,N-dimethylformamide, N,N-dimethylacetamide, etc.; sulfoxides such as dimethylsulfoxide, etc.; ethers such as tetrahydrofuran, dioxane, ethylene glycol monomethyl ether, etc.; esters such as methyl acetate, ethyl acetate, butyl acetate, etc.; aliphatic halogenated hydrocarbons such as chloroform, methylene chloride, dichloroethylene, carbon tetrachloride, trichloroethylene, etc.; aromatics such as benzene, toluene, xylene, monochlorobenzene, dichlorobenzene; or aliphatic hydrocarbons such as n-hexane, cyclohexanoligroin, etc.

Coating can practiced by use of dip coating, spray coating, spinner coating, bead coating, wire bar coating, blade coating, roller coating, curtain coating, etc.

The film thickness of the recording layer formed by use of such solvent may be suitably 50 Å to 100 µm, preferably 200 Å to 1 µm.

As described above, the compounds represented by the formula (1) and (2) have great absorption regions in the IR-region, can be synthesized simply, have also good solvent solubility and when used for optical recording medium, can provide optical recording medium increased in repeated reproduction durability and light resistance stability.

The present invention is described below in more detail by referring to Examples.

⟨Synthesis example 1⟩

A mixture of 0.1 mol of p-phenylenediamine, 0.6 mol of p-nitroiodobenzene, 0.25 mol of anhydrous potassium carbonate and 2 parts (by weight) of copper powder was refluxed under stirring in 150 parts of dimethylformamide for 4 days. After the reaction, the reaction mixture was filtered and the filtered product was washed well with dimethylformamide, water and acetone, followed by drying, to obtain 30 parts of reddish brown tetrakis(p-nitrophenyl)-p-phenylenediamine.

The compound obtained above (25 parts) together with 1 part of dimethylformamide palladium-carbon hydrogenation catalyst were added into an autoclave, hydrogen gas was applied to a pressure of 5.0 $kg/cm^2$ and stirring was continued at 90 °C to 100 °C until hydrogen absorption ceased.

After the reaction, the reaction mixture was filtered, the filtered product was washed with dimethylformamide and then filtrate was poured into 350 parts of ice-water. After stirred for a while, the precipitates were collected by filtration. Recrystallization from ethanol-dimethylformamide solvent mixture gave 14 parts of tetrakis(p-aminophenyl)-p-phenylenediamine. The purity by high performance liquid chromatography was found to be 98.7%.

By NMR ($d_6$-DMSO) analysis, asbsorption of amino group corresponding to 8H at $\delta$3.37 ppm, and absorption of aromatic ring corresponding to 20 H of broad doublet at $\delta$6.38 to 6.50 ppm were measured.

⟨Synthesis of 1-4⟩

The above amino derivative (3 parts) was stirred under heating at 100 °C to 130 °C together with 18 parts of dimethylformamide, 0.7 part of anhydrous sodium hydrogen carbonate and 3.9 parts of 2-methoxyethylbromide. After the reaction for 36 hours, the rection mixture was poured into 100 parts of ice-water and extracted with ethyl acetate. After drying, the product was purified by silica gel column. Amount obtained 3.4 parts. By IR-absorption analysis, disappearance of the absorption by NH stretching vibration of amino group was confirmed.

One part of the compound was dispersed in 20 parts of acetone and equimolar amount of silver perchlorate was added to the dispersion under stirring. After the reaction under room temperature for 1 hours, the precipitated silver was separated by filtration, the filtrate was diluted with isopropyl ether and left to stand and the precipitated crystals were collected by filtration. Amount obtained: 0.7 part.

The thus synthesized 1-4 was found to be a compound having a great absorption region in the IR-region with the maximum absorption wavelengths of 1258 nm and 957 nm.

⟨Synthesis of 2-1⟩

One part of tetrakis(dimethoxyethylaminophenyl)phenylenediamine used in synthesis of 1-4 was dispersed in 20 parts of acetone, and 2-fold mols of silver perchlorate were added under stirring. After the reaction under room temperature for 1 hour, the precipitated silver was separated by filtration, and the filtrate diluted with isopropyl ether. 0.55 Parts of precipitated crystals were collected by filtration.

The examples as described are in the case of an anion which is perchlorate, but in the case of other anions, the desired compounds can be easily obtained by use of silver salts corresponding thereto. For example, silver salts such as $AgSbF_6$, $AgBF_4$, $AgSO_4$, $AgNO_3$, $AgSO_3C_6H_4CH_3$, $AgSO_3CF_3$, etc. can be used. Otherwise, they can be also obtained by electrolytic oxidation.

⟨Synthesis of 1 - 29⟩

The above amino derivative (6.0 parts) was dissolved in 30 parts of dimethylformamide, 8.0 parts of anhydrous sodium hydrogen carbonate and 12.3 parts of 1,4-dibromobutane were added to the solution and the mixture was stirred under heating at 90 °C to 110 °C. After the reaction for 10 hours, the reaction mixture was poured into 100 parts of ice-water and the precipitates were collected by filtration. After drying, the product was purified by silica gel column. Amount obtained 8.3 parts (yield: 95.0%). By IR-absorption analysis, disappearance of the absorption by NH stretching vibration of amino group was confirmed.

One part of the cyclized compound was dispersed in 30 parts of acetone and equimolar amount of silver perchlorate was added to the dispersion under stirring. After the reaction under room temperature for 30 hours, the precipitated silver was separated by filtration and washed well with acetone. After evaporation of the solvent, the residue was washed with water and dried. Amount obtained: 0.85 part.

The thus synthesized 1-29 was found to be a compound having a great absorption region in the IR-region with the maximum absorption wavelength of 1019 nm and absorption coefficient of 88,000.

⟨Synthesis of 1-31⟩

The same reaction as in synthesis of 1-29 was carried out except for using 1,5-dibromopentane in place of 1,4-dibromobutane.

The maximum absorption wavelength was 1030 nm.

The examples as described are in the case of an anion which is perchlorate, but in the case of other anions, the desired compounds can be easily obtained by use of silver salts corresponding thereto. For example, silver salts such as $AgSbF_6$, $AgBF_4$, $AgSO_4$, $AgNO_3$, $AgAsF_6$, $AgSO_3C_6H_4CH_3$, $AgSO_3CF_3$, etc. can be used. Otherwise, they can be also obtained by electrolytic oxidation.

⟨Synthesis example 2⟩

The same reaction as in Synthesis example 1 was carried out except for changing p-phenylenediamine used in Synthesis example 1 to benzidine to obtain 12 parts of orange tetrakis(p-aminophenyl)benzidine.

⟨Synthesis of 1-38⟩

The amino derivative obtained in Synthesis example 2 (2 parts) was reacted for 16 hours with 40 parts of dimethylformamide, 0.33 part of anhydrous sodium hydrogen carbonate and 0.78 part of 1,4-dibromobutane at 90 °C to 110 °C. The reaction mixture was poured into 300 parts of ice-water and, after stirring, the precipitates were filtered, washed with water and ethanol. After drying, the product was separated from the starting materials. Amount obtained: 1.4 parts.

The pyrrolidine derivative obtained above (1 part) was reacted with 20 parts of dimethylformamide, 2.2 parts of butyl iodide and 1 part of anhydrous sodium carbonate at 120 °C for 30 hours. After the reaction, the mixture was poured into 100 parts of ice-water and the product recovered by filtration. By purification

with silica gel column, 1.1 parts of the desired product were obtined. By IR-absorption analysis, disappearance of the absorption by the NH stretching vibration of amino group was confirmed.

The above compound (0.5 part) was dispersed in 20 parts of acetone and silver perchlorate was added thereto to carry out the reaction unde room temperature for 30 hours. After the reaction, silver was filtered off and the solvent was evaporated from the filtrate to give 0.3 part of the desired product (1-12). The maximum absorption wavelength was 1050 nm.

〈Synthesis of 2-22〉

While 1.0 part of the pyrrolidine derivative obtained in the course of synthesis of 1-29 was dispersed with stirring into 40 parts of acetone, 2-fold mols of silver perchlorate were added and the mixture was stirred for 1 hour. After the reaction, the precipitaed silver salt was separated by filtration and washed well with acetone. After evaporation of acetone from the filtrate, the residue was washed with water and dried under reduced pressure. Amount obtained: 0.45 part. The product was an IR-ray absorptive comound having the maximum peak at 1040 nm.

Next, Examples utilizing the IR-ray absorptive compounds represented by the formula (1) and (2) are to be described.

〈Example 1〉

On a PMMA substrate with a diameter of 130 mmØ and a thickness of 1.2 mm was provided a pregroove of 50 $\mu$, and a solution containing an organic dye of a polymethine dye (IR-820, produced by Nippon Kayaku) and the above IR-ray absorptive compound No. 1-4 dissolved at a weight ratio of 90:10 in 1,2-dichloroethane was applied by spin coating to provide a recording layer of 800 Å. With a spacer of 0.3 mm sandwiched between inner circumference side and the outer circumference side of the medium thus obtained, another PMMA substrate was plastered with a UV-ray adhesive to obtain an optical recording medium of an air-sandwich structure.

With this medium rotated at 1800 rpm, writing of a spot diameter of 1.5 $\mu$mØ was effected from the substrate side with a recording power of 6 mW and a recording frequency of 2 MHz by use of a semiconductor laser of 830 nm. Next, reproduction was effected with a reading power of 0.9 mW and the C/N ratio was measured by spectral analysis. Subsequently, the C/N ratio after performing reading for 100,000 times (repeated reproduction) was measured.

Further, light-resistant stability test was performed by irradiaging a xenon lamp light of 1 KW/$m^2$ on the recording medium prepared under the above conditions for 100 hours, and the reflectance and the C/N ratio were measured. The results are shown in Table 2.

〈Example 2〉

On the same substrate as in Example 1, a recording layer was provided with a solution of 1-guaiazulenyl-5-(6′-t-butyl-4,8-dimethylazulenyl)-2,4-pentadienyl perchlorate and the above IR-ray absorptive compound No. 1-20 at a weight ratio of 90:10.

The same test as in Example 1 was conducted with the thus obtained optical recording medium. The results are shown in Table 2.

〈Examples 3 - 6〉

Optical recording media comprising the compositions shown in Table 1 were prepared in the same manner as in Example 1 and the same test as in Example 1 was conducted. The results are shown in Table 2.

Table 1

| Example No. | Dye | IR-absorptive compound No. | Weight ratio |
|---|---|---|---|
| 3 | (p-Diethylaminophenyl)(phenyl)methylene-1-cyclopente-2-nyl-3-((p-diethylaminophenyl)(phenyl)carbonium perchlorate | 1-7 | 90:10 |
| 4 | 1,5-Bis(diethylaminophenyl)-1,5-diphenyl-2,4-pentadienyl perchlorate | 2-18 | 90:10 |
| 5 | 1,5-Diguaiazulenyl-2,4-pentadienyl perchlorate | 2-10 | 80:20 |
| 6 | 1,1′-Dimethoxyethyl-3,3,3′,3′-tetramethyl-2,2′-indotricarbocyanine perchlorate | 2-13 | 70:30 |

〈Comparative examples 1 - 2〉

Optical recording media were prepared and evaluated in the same manner as in Examples 1 except for changing the IR-ray absorptive compound used in Example 1 to aminium perchlorate and diimonium perchlorate of N,N,N′,N′-tetrakis(p-di-n-butylaminophenyl)-p-phenylenediamine. The results are shown in Table 2.

〈Comparative examples 3 - 5〉

Optical recording media were prepared and evaluated except for using no IR-ray absorptive compound in Examples 2 to 4. The results are shown in Table 2.

Table 2

| | Initial stage | | After repeated reproduction | After light resistance test | |
|---|---|---|---|---|---|
| | Reflectance (%) | C/N(dB) | C/N(dB) | Reflectance (%) | C/N(dB) |
| Example 1 | 24.8 | 57 | 55 | 22.8 | 54 |
| 2 | 27.8 | 54 | 54 | 23.3 | 51 |
| 3 | 25.0 | 54 | 53 | 20.7 | 49 |
| 4 | 25.5 | 55 | 53 | 21.2 | 52 |
| 5 | 27.1 | 52 | 52 | 22.1 | 50 |
| 6 | 34.6 | 53 | 50 | 22.6 | 48 |
| Comparative Example 1 | 25.0 | 57 | 55 | 22.5 | 53 |
| 2 | 24.8 | 56 | 55 | 21.8 | 52 |
| 3 | 28.1 | 54 | 51 | 18.4 | 40 |
| 4 | 24.7 | 54 | 49 | 16.3 | 38 |
| 5 | 25.8 | 55 | 48 | 16.9 | 39 |

⟨Examples 7 - 11⟩

On a polycarbonate (hereinafter abbreviated as "PC") substrate with a thickness of 0.4 mm of a wallet size was provided a pregroove by the hot press method and a solution of the organic dye and the IR-ray absorptive compound shown in Table 3 mixed in diacetone alcohol was applied by the bar coating method, followed by drying to obtain a recording layer of 850 Å. Further, with a 0.3 mm PC substrate of Waret size through an ethylene-vinyl acetate dry film thereon, an optical recording medium with an adhered structure was prepared according to the hot roll method.

The optical recording medium of Example thus prepared was mounted on the stage driven in the X - Y direction, and an information was written on the organic thin film recording layer from the 0.4 mm thick PC substrate side in the Y-axis direction with a spot size of 3.0 $\mu m\varnothing$, a recording power of 4.0 mW and a recording pulse of 80 usec by use of a semiconductor laser with an oscillation wavelength of 830 nm, and reproduced with a reading power of 0.4 mW, and its contrast ratio (A - B/A: A→signal strength at unrecorded portion, B→signal strength at recorded portion) was measured.

Further, the same recording medium prepared under the above conditions was subjected to light-resistant stability test under the same conditions as in Example 1, and thereafter the reflectance and the contrast ratio were measured. The results are shown in Table 4.

Table 3

| Example No. | Organic dye | IR-absorptive compound No. | Weignt ratio |
|---|---|---|---|
| 7 | IR-820 (produced by Nippon Kayaku) | 1-13 | 80:20 |
| 8 | IR-820 (produced by Nippon Kayaku) | 1-10 | 85:15 |
| 9 | 1,5-Bis(dipropylaminophenyl)-1,5-diphenyl-2,4-pentadienyl perchlorate | 1-22 | 70:30 |
| 10 | (p-Dimethylaminophenyl)-p-(tolyl)methylene-1-cyclopente--phenyl-3-(p-dimethylaminophenyl)-(p-tolyl)carbonium perchlorate | 2-5 | 80:20 |
| 11 | 1,1′-Dimethoxyethyl-3,3,3′,3′-tetramethyl-2,2′-indotricarbocyanine perchlorate | 2-20 | 70:30 |

〈Comparative examples 6 - 9〉

Except for changing the IR-ray absorptive comound to tetrafluoroborate of tetrakis(p-di-n-butylaminophehyl)phenylenediimonium, optical recording media were prepared and evaluated in the same manner as in Examples 7, 9, 10 and 11. The results are shown in Table 4.

Table 4

| | Initial stage | | After light resistance test | |
|---|---|---|---|---|
| | Reflectance (%) | Contrast ratio | Reflectance (%) | Contrast ratio |
| Example 7 | 15.0 | 0.82 | 12.8 | 0.77 |
| 8 | 14.8 | 0.82 | 13.1 | 0.79 |
| 9 | 15.2 | 0.80 | 13.0 | 0.75 |
| 10 | 15.1 | 0.83 | 13.3 | 0.77 |
| 11 | 18.6 | 0.85 | 13.7 | 0.75 |
| Comparative Example 6 | 14.8 | 0.82 | 12.5 | 0.71 |
| 7 | 15.0 | 0.82 | 11.8 | 0.70 |
| 8 | 14.9 | 0.84 | 12.2 | 0.73 |
| 9 | 18.3 | 0.86 | 12.1 | 0.71 |

〈Example 12〉

On a PMMA substrate with a diameter of 130 mm ∅ and a thickness of 1.2 mm, a pregroove of 50 μ was provided and a recording layer of 800 Å was provided thereon by spin coating of a solution containing

an organic dye of a polymethine dye (IR-820, produced by Nippon Kayaku) and the above IR-ray absorptive compound No. 1-31 at a weight ratio of 90:10 dissolved in 1,2-dichloroethane. With a spacer of 0.3 mm sandwiched between the inner circumference side and the outer circumference side of the medium thus obtained, another PMMA substrate was plastered with a UV-ray adhesive to obtain an optical recording medium of an air-sandwich structure.

The optical recording medium was evaluated according to the same method as in Example 1.

〈Example 13〉

On the same substrate as in Example 12, a recording layer was provided with a solution of 1-guaiazulenyl-5-(6′-t-butyl-azulenyl)-2,4-pentadienyl perchlorate and the above IR-ray absorptive compound No. 1-37 at a weight ratio of 90:10.

The same test as in Example 1 was conducted with the thus obtained optical recording medium.

〈Examples 14 - 18〉

Optical recording media comprising the compositions shown in Table 5 were prepared in the same manner as in Example 12 and the same test as in Example 12 was conducted.

Table 5

| Example No. | Organic dye | IR-absorptive compound No. | Weight ratio |
|---|---|---|---|
| 14 | 1,5-Diguaiazulenyl-2,4-pentadienyl perchlorate | 2-25 | 85:15 |
| 15 | (p-Dimethylaminophenyl)-(p-ethoxyphenyl)methylene-1-cyclopente-2-nyl-3-(p-dimethylaminophenyl)-(p-ethoxyphenyl-)carbonium perchlorate | 1-44 | 90:10 |
| 16 | 1,5-Bis(diethylaminophenyl)-1,5-diphenyl-2,4-pentadienyl perchlorate | 2-32 | 90:10 |
| 17 | 1,1,5-Triguaiazulenyl-2,4-pentadienyl perchlorate | 1-34 | 80:20 |
| 18 | NK-1414 produced by Nippon Kanko Shikiso | 2-30 | 70:30 |

〈Comparative examples 10 - 12〉

Optical recording media were prepared and evaluated in the same manner as in Examples 12, 13 and 16 except for excluding the IR-ray absorptive compounds used in Examples 12, 13 and 16.

〈Comparative example 13〉

An optical recording medium was prepared and evaluated in the same manner as in Example 1 except for changing the IR-ray absorptive compound used in Example 12 to a perchloric acid salt of aminium of N,N,N′,N′-tetrakis(p-di-n-butylaminophenyl)-p-phenylenediamine.

〈Comparative examples 14, 15〉

Optical recording media were prepared and evaluated in the same manner as in Examples 13 and 14 except for changing the IR-ray absorptive compound used in Examples 13 and 14 to perchloric acid of aminium of N,N,N′,N′-tetrakis(p-di-n-butylaminophenyl)-p-phenylenediamine. The results are shown in Table 6.

Table 6

| | Initial Stage | | After repeated reproduction | After light resistance test | |
|---|---|---|---|---|---|
| | Reflectance (%) | C/N(dB) | C/N(dB) | Reflectance (%) | C/N(dB) |
| Example 12 | 25.0 | 57 | 55 | 22.7 | 54 |
| 13 | 27.6 | 54 | 54 | 23.1 | 51 |
| 14 | 27.2 | 52 | 52 | 21.9 | 50 |
| 15 | 25.0 | 53 | 53 | 19.9 | 48 |
| 16 | 25.6 | 55 | 52 | 20.7 | 50 |
| 17 | 29.2 | 54 | 53 | 21.5 | 50 |
| 18 | 32.2 | 53 | 50 | 18.8 | 47 |
| Comparative Example 10 | 19.8 | 50 | 46 | 13.1 | 32 |
| 11 | 28.2 | 54 | 51 | 15.1 | 33 |
| 12 | 25.8 | 54 | 48 | 13.8 | 30 |
| 13 | 25.0 | 57 | 55 | 22.5 | 53 |
| 14 | 26.5 | 52 | 50 | 19.8 | 45 |
| 15 | 25.0 | 50 | 47 | 18.3 | 44 |

⟨Examples 19 - 22⟩

On a polycarbonate (hereinafter abbreviated as "PC") substrate with a thickness of 0.4 mm of a wallet size was provided a pregroove by the hot press method, and a solution of the organic dye and the IR-ray absorptive compound shown in Table 7 mixed in diacetone alcohol was applied by the bar coating method, followed by drying to obtain a recording layer of 850 Å. Further, with a 0.3 mm PC substrate of a wallet size through an ethylene-vinyl acetate dry film thereon, an optical recording medium with an adhered structure was prepared according to the hot roll method.

The optical recording medium of Example thus prepared was mounted on the stage driven in the X - Y direction, and an information was written on the organic thin film recording layer from the 0.4 mm PC substrate side in the Y-axis direction with a spot size of 3.0 μmØ, a recording power of 4.0 mW and a recording pulse of 80 μsec by use of a semiconductor laser with an oscillation wavelength of 830 nm, and reproduced with a reading power of 0.4 mW, and its contrast ratio (A - B/A: A→signal strength at unrecorded portion, B→signal strength at recorded portion) was measured.

Further, the same recording medium prepared under the above conditions was subjected to light-resistant stability test under the same conditions as in Example 1, and thereafter the reflectance and the contrast ratio were measured.

Table 7

| Example No. | Organic dye | IR-absorptive compound No. | Weight ratio |
|---|---|---|---|
| 19 | IR-820 (produced by Nippon Kayaku) | 2-25 | 70:30 |
| 20 | (p-Dimethylaminophenyl)-(p-ethoxyphenyl)-methylene-1-cyclopente-2-nyl-3-(p-dimethylaminophenyl)-(p-ethoxyphenyl)carbonium perchlorate | 1-44 | 85:15 |
| 21 | 1,5-Bis(dipropylaminophenyl)-1,5-diphenyl-2,4-pentadienyl perchlorate | 1-32 | 80:20 |
| 22 | 1-Guaiazulenyl-5,5-bis(diethylaminophenyl)-2,4-pentadienyl perchlorate | 2-29 | 80:20 |

〈Comparative examples 16, 17〉

Except for excluding the IR-ray absorptive compound in Examples 19 and 21, optical recording media were prepared and evaluated in the same manner as in Examples 19 and 21.

〈Comparative example 18〉

Except for changing the IR-ray absorptive compound to perchloric acid salt of diimonium of tetrakis(p-di-n-butyl-aminophehyl)-p-phenylenediamine, optical recording medium was prepared and evaluated in the same manner as in Example 20.

〈Comparative examples 19, 20〉

Optical recording media were prepared and evaluated in the same manner as in Example 19 except for changing the IR-ray absorptive compound used in Example 19 to hexafluoroarsenic acid salt of aminium of N,N,N′,N′-tetrakis(p-di-n-butylaminophenyl)-p-phenylenediamine and hexafluoroarsenic acid salt of diimonium of N,N,N′,N′-tetrakis(p-di-n-butylaminophenyl)-p-phenylenediamine. The results are shown in Table 8.

Table 8

| | Initial stage | | After light resistance test | |
|---|---|---|---|---|
| | Reflectance (%) | Contrast ratio | Reflectance (%) | Contrast ratio |
| Example 19 | 14.7 | 0.81 | 12.7 | 0.76 |
| 20 | 15.3 | 0.83 | 13.0 | 0.77 |
| 21 | 15.0 | 0.80 | 12.9 | 0.75 |
| 22 | 15.3 | 0.82 | 13.1 | 0.76 |
| Comparative Example | | | | |
| 16 | 15.0 | 0.79 | 11.5 | 0.68 |
| 17 | 15.1 | 0.80 | 9.8 | 0.61 |
| 18 | 15.2 | 0.82 | 12.8 | 0.75 |
| 19 | 15.3 | 0.80 | 12.5 | 0.71 |
| 20 | 15.0 | 0.80 | 12.1 | 0.70 |

## Claims

**1.** An infra-red ray absorptive compound represented by the formula (1) or (2) :

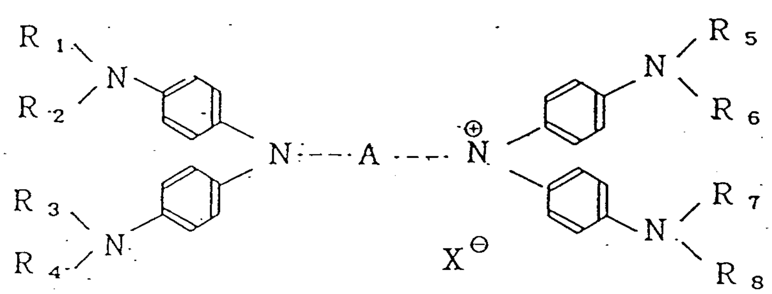

(1)

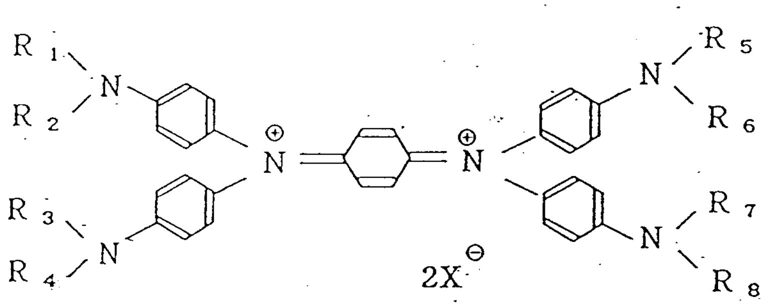

(2)

wherein: A represents

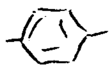

or

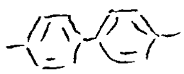

which may have halogen or alkyl or alkoxy groups as substituents;
$X^-$ represents an anion; and
$R_1$ - $R_8$ are substituents having one to eight carbon atoms, subject to the proviso that either (a) at least one of $R_1$ - $R_8$ is an alkoxyalkyl or an alkynyl group, or (b) at least one combination of $R_1$ and $R_2$, $R_3$ and $R_4$, $R_5$ and $R_6$ or $R_7$ and $R_8$ together with the nitrogen atom to which they are attached represent a substituted or unsubstituted pyrrolidine piperidine, morpholine, tetrahydropyridine or

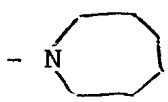

ring and other substituents are straight or branched alkyl groups.

**2.** The compound of claim 1, wherein at least one of $R_1$ - $R_8$ is : methoxymethyl, methoxyethyl, 2-methoxyethyl, 3-methoxypropyl, 2-methoxypropyl, 4-methoxybutyl, 3-methoxybutyl, 2-methoxybutyl, 5-methoxypentyl, 4-methoxypentyl, 3-methoxypentyl, 2-methoxypentyl, 6-methoxyhexyl, ethoxymethyl, ethoxyethyl, 2-ethoxyethyl, 3-ethoxypropyl, 2-ethoxypropyl, 4-ethoxybutyl, 3-ethoxybutyl, 5-ethoxypentyl, 4-ethoxypentyl, 6-ethoxyhexyl, propoxymethyl, 2-propoxyethyl, 3-propoxypropyl, 4- propoxybutyl or 5 propoxypentyl.

**3.** The compound of claim 1, wherein at least one of $R_1$ to $R_8$ represents propargyl, 3-butynyl, 4-pentynyl or 5-hexynyl.

**4.** The compound of claim 1, wherein all of $R_1$ and $R_2$, $R_3$ and $R_4$, $R_5$ and $R_6$ and $R_7$ and $R_8$ together with the nitrogen atom to which they are attached represent pyrrolidine, 2-methyl pyrrolidine, piperidine, morpholine tetrahydropyridine or

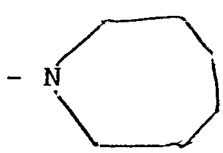 .

**5.** The compound of claim 1, wherein all of $R_1$ - $R_8$ represent alkoxyalkyl groups.

**6.** The compound of claim 1 wherein all of $R_1$ - $R_8$ represent methoxyethyl groups or ethoxyethyl groups.

**7.** The compound of claim 1, wherein all of $R_1$ - $R_8$ represents alkynyl groups.

**8.** The compound of claim 1, wherein all of $R_1$ - $R_8$ represent propargyl groups.

**9.** A compound as claimed in any preceding claim, wherein the anion $X^-$ represents bromide, iodide, perchlorate, nitrate, benzenesulfonate, p-toluenesulfonate, methylsulfate, ethylsulfate, propylsulfate, tetrafluoroborate, tetraphenylborate, hexafluorophosphate, benzenesulfinate, acetate, trifluoroacetate, propionacetate, benzoate, oxalate, succinate, malonate, oleate, stearate, citrate, monohydrogen diphosphate, dihydrogen monophosphate, pentachlorostannate, chlorosulfonate, fluorosulfonate, trifluoromethansulfonate, hexafluoroarsenate, hexafluoroantimonate, molybdenate, tungustate, titanate or zirconate ions.

**10.** An optical recording medium comprising a substrate and an organic dye thin film on the substrate, in which film there is present an infra-red absorptive compound represented by the formula (1') or (2'):

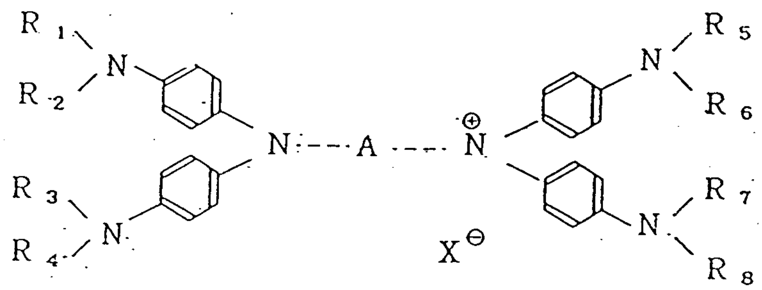

(1')

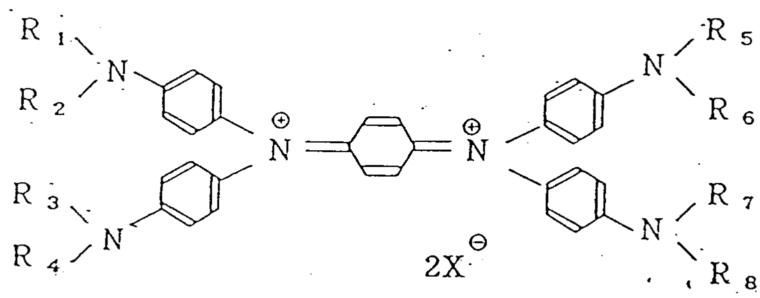

(2')

wherein: A represents

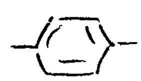

or

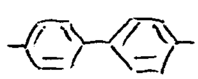

which may have halogen or alkyl or alkoxy groups as substituents;
$X^-$ represents an anion; and
$R_1$ - $R_8$ are substituents having one to eight carbon atoms, subject to the proviso that either (a) at least one of $R_1$ - $R_8$ is an alkoxyalkyl, alkenyl or an alkynyl group, or (b) at least one combination of $R_1$ and $R_2$, $R_3$ and $R_4$, $R_5$ and $R_6$ or $R_7$ and $R_8$ together with the nitrogen atom to which they are attached represent a substituted or unsubstituted pyrrolidine, piperidine, morpholine, tetrahydropyridine or

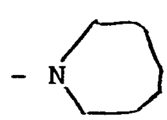

ring and other substituents are straight or branched alkyl groups.

**11.** An optical recording medium according to claim 10, wherein at least one of $R_1$ - $R_8$ is: methoxymethyl, methoxyethyl, 2-methoxyethyl, 3-methoxypropyl, 2-methoxypropyl, 4-methoxybutyl, 3-methoxybutyl, 2-methoxybutyl, 5-methoxypentyl, 4-methoxypentyl, 3-methoxypentyl, 2-methoxypentyl, 6-methoxyhexyl, ethoxymethyl, ethoxyethyl, 2-ethoxyethyl, 3-ethoxypropyl, 2-ethoxypropyl, 4-ethoxybutyl, 3-ethoxybutyl, 5-ethoxypentyl, 4-ethoxypentyl, 6-ethoxyhexyl, propoxymethyl, 2-propoxyethyl, 3-propoxypropyl, 4-propoxybutyl or 5-propoxypentyl.

**12.** An optical recording medium according to claim 10, wherein all of $R_1$-$R_8$ represent alkoxyalkyl groups.

**13.** An optical recording medium according to claim 10, wherein all of $R_1$-$R_8$ represent methoxyethyl groups or ethoxyethyl groups.

**14.** An optical recording medium according to claim 10, wherein at least one of $R_1$- $R_8$ represent allyl, butenyl, pentenyl, hexenyl, heptenyl, octenyl, 2-methylpropenyl, pentadienyl or hexadienyl.

**15.** An optical recording medium according to claim 10, wherein all of $R_1$- $R_8$ represent alkenyl groups.

**16.** An optical recording medium according to claim 15, wherein all of $R_1$- $R_8$ are allyl or butenyl.

**17.** An optical recording medium according to claim 10, wherein at least one of $R_1$- $R_8$ is a propargyl 3-butynyl, 4-pentynyl or 5-hexynyl group.

**18.** An optical recording medium according to claim 10, wherein all of $R_1$ - $R_8$ are alkynyl groups.

**19.** An optical recording medium according to claim 18, wherein all of $R_1$ - $R_8$ are propargyl groups.

**20.** An optical recording medium according to claim 10, wherein all of $R_1$ and $R_2$, $R_3$ and $R_4$, $R_5$ and $R_6$ and $R_7$ and $R_8$ together with the nitrogen atom to which they are attached represent pyrrolidine, 2-methyl pyrrolidine, piperidine, morpholine, tetrahydropyridine ring or

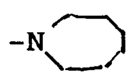 .

**21.** An optical recording medium according to any of claims 10 to 20, wherein the anion $X^-$ is bromide, iodide, perchlorate, nitrate, benzenesulfonate, p-toluenesulfonate, methylsulfate, ethylsulfate, propylsulfate, tetrafluoroborate, tetraphenylborate, hexafluorophosphate, benzenesulfinate, acetate, trifluoroacetate, propionacetate, benzoate, oxalate, succinate, malonate, oleate, stearate, citrate, monohydrogen diphosphate, dihydrogen monophosphate, pentachlorostannate, chlorosulfonate, fluorosulfonate, trifluoromethansulfonate, hexafluoroarsenate, hexafluoroantimonate, molybdenate, tungstate,titanate or zirconate ions.

**22.** An optical recording medium according to any of claims 10 to 21, wherein the organic dye thin film has a film thickness of 5 nm to 100 $\mu$m.

**23.** An optical recording medium according to claim 22, wherein the organic dye thin film has a thickness of 20 nm to 100 $\mu$m.

**24.** An optical recording medium according to any of claims 10 to 23, wherein a protective layer is provided on the organic dye thin film.

**25.** An optical recording medium according to any of claims 10 to 24, wherein a subbing layer is provided between the organic dye thin film and the substrate.

**26.** An optical recording medium according to any of claims 10 to 25, wherein a compound of formula (1') or (2') is present in an amount of 1 to 60% by weight based on the total solids in the organic dye thin film.

**27.** An optical recording medium according to any of claims 10 to 25, wherein the compound of formula (1') or (2') is present in an amount of 5 to 40% by weight based on the total solids in the organic dye thin film.

**28.** An optical recording medium according to any of claims 10 to 25, wherein the compound of formula (1') or (2') is present in an amount of 30% by weight based on the total solids in the organic dye thin film.

**29.** An optical recording medium according to any of claims 10 to 28, further comprising another compound that absorbs near infrared rays.

**30.** An optical recording medium according to claim 29, wherein the other infra-red absorbent compound is a polymethine dye.

**31.** An optical recording medium according to claim 29, wherein the other infra-red absorbent compound is a cyanine, melocyanine, croconium, squarilium, azulenium, naphthoquinone, pyrilium or phthalocyanine dye.

**32.** An optical recording medium according to any of claims 10 to 31, wherein the substrate is pre-grooved for recording information thereon or reading information therefrom by means of a semiconductor laser.

**33.** A method of preparing an optical recording medium having an organic dye thin film on a substrate, which comprises forming said organic dye thin film by applying a solvent containing a compound represented by the formula (1') or (2') as defined in any of claims 10 to 21.

**34.** An optical recording method which comprises irradiating an optical recording medium comprising a substrate and an organic dye thin film with a laser beam to form pits on said organic dye thin film, characterised in that said organic dye thin film contains a compound of the formula (1') and/or (2') as defined in any of claims 10 to 21.

**35.** An optical reproducing method which comprises illuminating an optical recording medium comprising a substrate and an organic dye thin film with a laser beam to read out information recorded on said organic dye thin film in the form of optically detectable pits by detecting optical variation of reflected light of said laser beam from said organic dye thin film, characterised in that said organic dye thin film contains a compound of the formula (1') and/or (2') as defined in any of claims 10 to 21.

## Patentansprüche

**1.** Infrarot-Strahlen absorbierende Verbindung, dargestellt durch die Formel (1) oder (2):

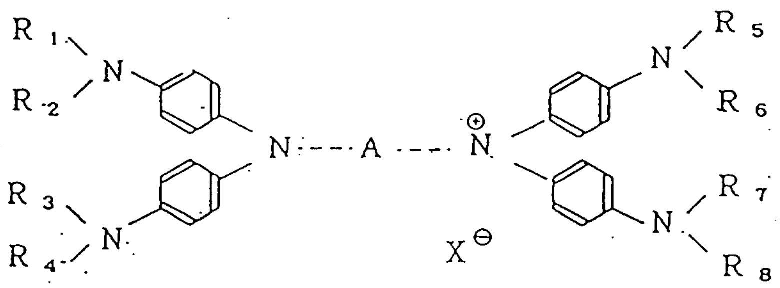

(1)

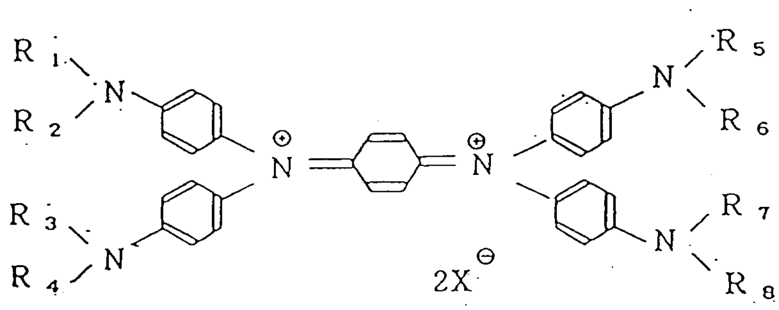

(2)

worin: A

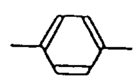

oder

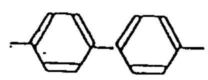

bedeutet, welche Halogen- , Alkyl- oder Alkoxyl-Gruppen als Substituenten haben können; $X^-$ ein Anion darstellt; und
$R_1$ bis $R_8$ Substituenten mit einem bis acht Kohlenstoff-Atomen sind, mit der Maßgabe, daß entweder (a) mindestens eine der Gruppen $R_1$ bis $R_8$ eine Alkoxyalkyl- oder eine Alkinyl-Gruppe ist, oder (b) mindestens eine Kombination von $R_1$ und $R_2$, $R_3$ und $R_4$, $R_5$ und $R_6$ oder $R_7$ und $R_8$ zusammen mit dem Stickstoff-Atom, an das sie gebunden sind, ein substituiertes oder unsubstituiertes Pyrrolidin, Piperidin, Morpholin, Tetrahydropyridin oder

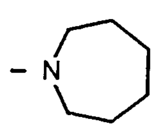

-Ring darstellen und andere Substituenten gerade oder verzweigte Alkyl-Gruppen sind.

**2.** Verbindung nach Anspruch 1, in der mindestens eine der Gruppen $R_1$ bis $R_8$ folgende Bedeutung haben:
Methoxymethyl, Methoxyethyl, 2-Methoxyethyl, 3-Methoxypropyl, 2-Methoxypropyl, 4-Methoxybutyl, 3-Methoxybutyl, 2-Methoxybutyl, 5-Methoxypentyl, 4-Methoxypentyl, 3-Methoxypentyl, 2-Methoxypentyl, 6-Methoxyhexyl, Ethoxymethyl, Ethoxyethyl, 2-Ethoxyethyl, 3-Ethoxypropyl, 2-Ethoxypropyl, 4-Ethoxybutyl, 3-Ethoxybutyl, 5-Ethoxypentyl, 4-Ethoxypentyl, 6-Ethoxyhexyl, Propoxymethyl, 2-Propoxyethyl, 3-Propoxypropyl, 4-Propoxybutyl oder 5-Propoxypentyl.

**3.** Verbindung nach Anspruch 1, in der mindestens eine der Gruppen $R_1$ bis $R_8$ Propargyl, 3-Butinyl, 4-Pentinyl oder 5-Hexinyl bedeuten.

**4.** Verbindung nach Anspruch 1, in der alle Gruppen $R_1$ und $R_2$, $R_3$ und $R_4$, $R_5$ und $R_6$ und $R_7$ und $R_8$ zusammen mit dem Stickstoff-Atom, an das sie gebunden sind, Pyrrolidin, 2-Methyl-Pyrrolidin, Piperidin, Morpholin, Tetrahydropyridin oder

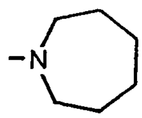

bedeuten.

**5.** Verbindung nach Anspruch 1, in der alle Gruppen $R_1$ bis $R_8$ Alkoxyalkyl-Gruppen sind.

**6.** Verbindung nach Anspruch 1, in der alle Gruppen $R_1$ bis $R_8$ Methoxyethyl-Gruppen oder Ethoxyethyl-Gruppen sind.

**7.** Verbindung nach Anspruch 1,in der alle Gruppen $R_1$ bis $R_8$ Alkinyl-Gruppen sind.

**8.** Verbindung nach Anspruch 1, in der alle Gruppen $R_1$ bis $R_8$ Propargyl-Gruppen sind.

**9.** Verbindung nach einem der vorhergehenden Ansprüche, in der das Anion $X^-$ Bromid, Iodid, Perchlorat, Nitrat, Benzolsulfonat, p-Toluolsulfonat, Methylsulfat, Ethylsulfat, Propylsulfat, Tetrafluorborat, Tetraphenylborat, Hexafluorphosphat, Benzolsulfinat, Acetat, Trifluoracetat, Propionacetat, Benzoat, Oxalat, Succinat, Malonat, Oleat, Stearat, Citrat, Monohydrogendiphosphat, Dihydrogenmonophosphat, Pentachlorstannat, Chlorsulfonat, Fluorsulfonat, Trifluormethansulfonat, Hexafluorarsenat, Hexafluorantimonat, Molybdat, Wolframat, Titanat oder Zirconat-Ionen bedeutet.

**10.** Optisches Aufzeichnungsmaterial, das ein Substrat sowie einen organischen Farbstoff-Dünnfilm auf dem Substrat umfaßt, wobei der Film eine infrarot-absorbierende Verbindung enthalt, dargestellt durch die Formeln (1') oder (2'):

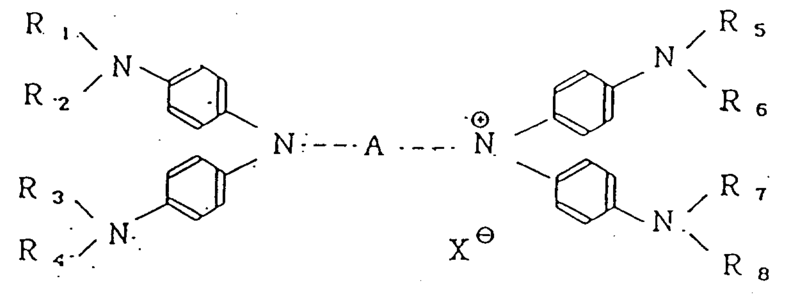

(1′)

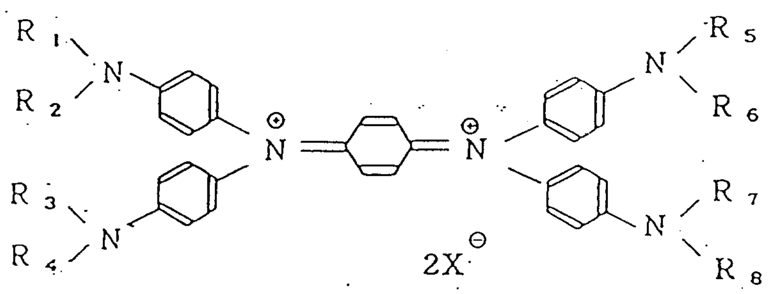

(2′)

worin: A

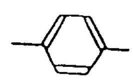

oder

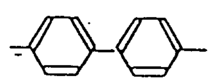

bedeutet, welche Halogen-, Alkyl- oder Alkoxyl-Gruppen als Substituenten enthalten können;
$X^-$ ein Anion bedeutet; und
$R_1$ bis $R_8$ Substituenten mit einem bis acht Kohlenstoff-Atomen sind, mit der Maßgabe, daß entweder (a) mindestens eine der Gruppen $R_1$ bis $R_8$ eine Alkoxyalkyl-, eine Alkenyl- oder eine Alkinyl-Gruppe ist, oder (b) mindestens eine Kombination von $R_1$ und $R_2$, $R_3$ und $R_4$, $R_5$ und $R_6$ oder $R_7$ und $R_8$ zusammen mit dem Stickstoff-Atom, an das sie gebunden sind, ein substituiertes oder unsubstituiertes Pyrrolidin, Piperidin, Morpholin, Tetrahydropyridin oder einen

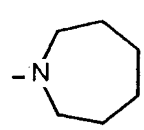

-Ring darstellen und andere Substituenten gerade oder verzweigte Alkyl-Gruppen sind.

**11.** Optisches Aufzeichnungsmaterial nach Anspruch 10, bei dem mindestens eine der Gruppen $R_1$ bis $R_8$ folgende Bedeutung haben:
Methoxymethyl, Methoxyethyl, 2-Methoxyethyl, 3-Methoxypropyl, 2-Methoxypropyl, 4-Methoxybutyl, 3-Methoxybutyl, 2-Methoxybutyl, 5-Methoxypentyl, 4-Methoxypentyl, 3-Methoxypentyl, 2-Methoxypentyl, 6-Methoxyhexyl, Ethoxymethyl, Ethoxyethyl, 2-Ethoxyethyl, 3-Ethoxypropyl, 2-Ethoxypropyl, 4-Ethoxybutyl, 3-Ethoxybutyl, 5-Ethoxypentyl, 4-Ethoxypentyl, 6-Ethoxyhexyl, Propoxymethyl, 2-Propoxyethyl, 3-Propoxypropyl, 4-Propoxybutyl oder 5-Propoxypentyl.

**12.** Optisches Aufzeichnungsmaterial nach Anspruch 10, bei dem alle Gruppen $R_1$ bis $R_8$ Alkoxyalkyl-Gruppen sind.

**13.** Optisches Aufzeichnungsmaterial nach Anspruch 10, bei dem alle Gruppen $R_1$ bis $R_8$ Methoxyethyl-Gruppen oder Ethoxyethyl-Gruppen sind.

**14.** Optisches Aufzeichnungsmaterial nach Anspruch 10, bei dem mindestens eine der Gruppen $R_1$ bis $R_8$ Allyl, Butenyl, Pentenyl, Hexenyl, Heptenyl, Octenyl, 2-Methylpropenyl, Pentadienyl oder Hexadienyl darstellen.

**15.** Optisches Aufzeichnungsmaterial nach Anspruch 10, bei dem alle Gruppen $R_1$ bis $R_8$ Alkenyl-Gruppen sind.

**16.** Optisches Aufzeichnungsmaterial nach Anspruch 15, bei dem alle Gruppen $R_1$ bis $R_8$ Allyl oder Butenyl sind.

**17.** Optisches Aufzeichnungsmaterial nach Anspruch 10, bei dem mindestens eine der Gruppen $R_1$ bis $R_8$ eine Propargyl, 3-Butinyl, 4-Pentinyl oder 5-Hexinyl-Gruppe sind.

**18.** Optisches Aufzeichnungsmaterial nach Anspruch 10, bei dem alle Gruppen $R_1$ bis $R_8$ Alkinyl-Gruppen sind.

**19.** Optisches Aufzeichnungsmaterial nach Anspruch 18, bei dem alle Gruppen $R_1$ bis $R_8$ Propargyl-Gruppen sind.

**20.** Optisches Aufzeichnungsmaterial nach Anspruch 10, bei dem alle Gruppen $R_1$ und $R_2$, $R_3$ und $R_4$, $R_5$ und $R_6$ und $R_7$ und $R_8$ zusammen mit dem Stickstoff-Atom, an das sie gebunden sind, Pyrrolidin, 2-Methyl-Pyrrolidin, Piperidin, Morpholin, einen Tetrahydropyridin-Ring oder

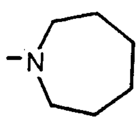

darstellen.

**21.** Optisches Aufzeichnungsmaterial nach einem der Ansprüche 10 bis 20, wobei das Anion $X^-$ Bromid, Iodid, Perchlorat, Nitrat, Benzolsulfonat, p-Toluolsulfonat, Methylsulfat, Ethylsulfat, Propylsulfat, Tetrafluorborat, Tetraphenylborat, Hexafluorphosphat, Benzolsulfinat, Acetat, Trifluoracetat, Propionacetat, Benzoat, Oxalat, Succinat, Malonat, Oleat, Stearat, Citrat, Monohydrogendiphosphat, Dihydrogenmonophosphat, Pentachlorstannat, Chlorsulfonat, Fluorsulfonat, Trifluormethansulfonat, Hexafluorarsenat, Hexafluorantimonat, Molybdänat, Wolframat, Titanat oder Zirconat-Ionen bedeutet.

**22.** Optisches Aufzeichnungsmaterial nach einem der Ansprüche 10 bis 21, bei dem der organische Farbstoff-Dünnfilm eine Filmdicke von 5 nm bis 100 µm aufweist.

**23.** Optisches Aufzeichnungsmaterial nach Anspruch 22, bei dem der organische Farbstoff-Dünnfilm eine Dicke von 20 nm bis 100 µm aufweist.

**24.** Optisches Aufzeichnungsmaterial nach einem der Ansprüche 10 bis 23, bei dem eine Schutzschicht auf den organischen Farbstoff-Dünnfilm aufgebracht ist.

**25.** Optisches Aufzeichnungsmaterial nach einem der Ansprüche 10 bis 24, bei dem eine Zwischenschicht zwischen dem organischen Farbstoff-Dünnfilm und dem Substrat aufgebracht ist.

**26.** Optisches Aufzeichnungsmaterial nach einem der Ansprüche 10 bis 25, in dem eine Verbindung nach Formel (1') oder (2') in einem Betrag von 1 - 60 Gewichts-%, bezogen auf die Gesamt-Feststoffe im organischen Farbstoff-Dünnfilm, enthalten ist.

**27.** Optisches Aufzeichnungsmaterial nach einem der Ansprüche 10 bis 25, in dem die Verbindung nach Formel (1') oder (2') in einem Betrag von 5 - 40 Gewichts-%, bezogen auf die Gesamt-Feststoffe im organischen Farbstoff-Dünnfilm, enthalten ist.

**28.** Optisches Aufzeichnungsmaterial nach einem der Ansprüche 10 bis 25, in dem die Verbindung nach Formel (1') oder (2') in einem Betrag von 30 Gewichts-%, bezogen auf die Gesamt-Feststoffe im organischen Farbstoff-Dünnfilm, enthalten ist.

**29.** Optisches Aufzeichnungsmaterial nach einem der Ansprüche 10 bis 28, das weiterhin eine andere Verbindung, die Strahlen im nahen Infrarot absorbiert, enthält.

**30.** Optisches Aufzeichnungsmaterial nach Anspruch 29, bei dem die andere infrarot-absorbierende Verbindung ein Polymethin-Farbstoff ist.

**31.** Optisches Aufzeichnungsmaterial nach Anspruch 29, bei dem die andere infrarot-absorbierende Verbindung ein Cyanin-, Melocyanin-, Croconium-, Squarilium-, Azulenium-, Naphthochinon-, Pyrilium- oder Phthalocyanin-Farbstoff ist.

**32.** Optisches Aufzeichnungsmaterial nach einem der Ansprüche 10 bis 31, bei dem das Substrat vorgekerbt ist, um darauf mit Hilfe eines Halbleiter-Lasers Information aufzuzeichnen oder um davon Infomation zu lesen.

**33.** Verfahren zur Herstellung eines optischen Aufzeichnungsmaterials mit einem organischen Farbstoff-Dünnfilm auf einem Substrat, umfassend die Bildung des organischen Farbstoff-Dünnfilms durch Auftragen eines Lösungsmittels, das eine Verbindung enthält, die durch die Formeln (1') oder (2'), gemäß Ansprüchen 10 bis 21, dargestellt sind.

**34.** Optisches Aufzeichnungs-Verfahren, das die Belichtung eines optischen Aufzeichnungsmaterials, enthaltend ein Substrat und einen organischen Farbstoff-Dünnfilm, mit einem Laser-Strahl umfaßt, zur Bildung von Löchern auf dem organischen Farbstoff-Dünnfilm, dadurch gekennzeichnet, daß der organische Farbstoff-Dünnfilm eine Verbindung nach Formel (1') und/oder (2'), gemäß einem der Ansprüche 10 bis 21, enthält.

**35.** Optisches Wiedergabeverfahren, das die Beleuchtung eines optischen Aufzeichnungsmaterials, enthaltend ein Substrat und einen organischen Farbstoff-Dünnfilm, mit einem Laser-Strahl umfaßt, um Information auszulesen, die auf dem organischen Farbstoff-Dünnfilm in Form von optisch erkennbaren Löchern gespeichert ist, indem man die optische Schwankung des von dem organischen Dünnfilm reflektierten Lichtes des Laserstrahls ermittelt, dadurch gekennzeichnet, daß der organische Farbstoff-Dünnfilm eine Verbindung nach Formel (1') und/oder (2'), gemäß einem der Ansprüche 10 bis 21, enthält.

## Revendications

1. Composé absorbant le rayonnement infrarouge, représenté par la formule (1) ou (2) :

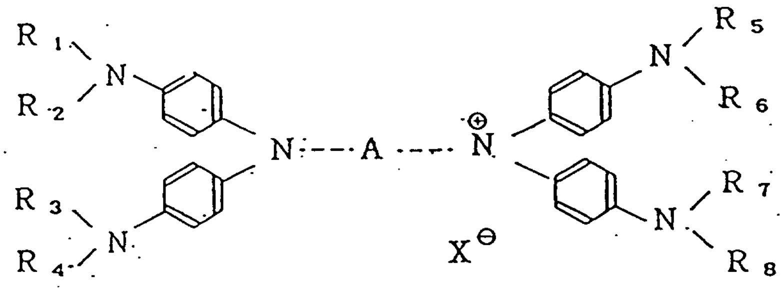

(1)

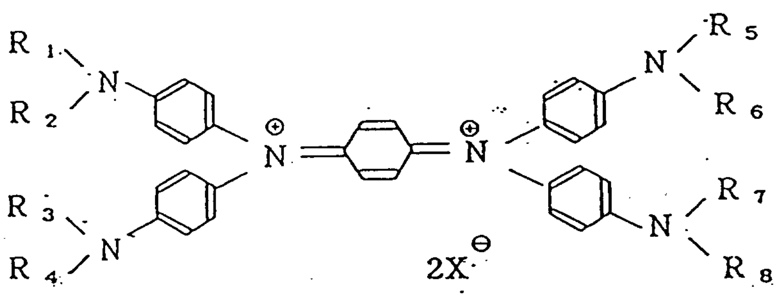

(2)

dans laquelle : A représente un groupe

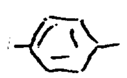

ou

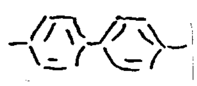

qui peut porter un halogène ou des groupes alkyle ou alkoxy comme substituants ;

$X^-$ représente un anion ; et

$R_1$ à $R_8$ représentent des substituants ayant 1 à 8 atomes de carbone, sous réserve que (a) au moins un des groupes $R_1$ à $R_8$ représente un groupe alkoxyalkyle ou alcynyle, ou (b) au moins une association des groupes $R_1$ et $R_2$, $R_3$ et $R_4$, $R_5$ et $R_6$ ou $R_7$ et $R_8$, conjointement avec l'atome d'azote auquel ils sont fixés, représente un noyau, substitué ou non substitué, pyrrolidine, pipéridine, morpholine, tétrahydropyridine ou

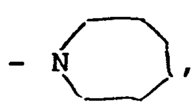

et les autres substituants sont des groupes alkyle droits ou ramifiés.

2. Composé suivant la revendication 1, dans lequel au moins un des groupes $R_1$ à $R_8$ représente un groupe : méthoxyméthyle, méthoxyéthyle, 2-méthoxyéthyle, 3-méthoxypropyle, 2-méthoxypropyle, 4-méthoxybutyle, 3-méthoxybutyle, 2-méthoxybutyle, 5-méthoxypentyle, 4-méthoxypentyle, 3-méthoxypentyle, 2-méthoxypentyle, 6-méthoxyhexyle, éthoxyméthyle, éthoxyéthyle, 2-éthoxyéthyle, 3-éthoxypropyle, 2-éthoxypropyle, 4-éthoxybutyle, 3-éthoxybutyle, 5-éthoxypentyle, 4-éthoxypentyle, 6-éthoxyhexyle, propoxyméthyle, 2-propoxyéthyle, 3-propoxypropyle, 4-propoxybutyle ou 5-propoxypentyle.

**3.** Composé suivant la revendication 1, dans lequel au moins un des groupes $R_1$ à $R_8$ représente un groupe propargyle, 3-butynyle, 4-pentynyle ou 5-hexynyle.

**4.** Composé suivant la revendication 1, dans lequel tous les groupes $R_1$ et $R_2$, $R_3$ et $R_4$, $R_5$ et $R_6$ et $R_7$ et $R_8$,conjointement avec l'atome d'azote auquel ils sont fixés, re,présentent un noyau pyrrolidine, 2-méthylpyrrolidine, pipéridine, morpholine, tétrahydropyridine ou

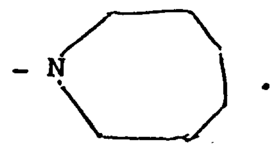

**5.** Composé suivant la revendication 1, dans lequel tous les groupes $R_1$ à $R_8$ représentent des groupes alkoxyalkyle.

**6.** Composé suivant la revendication 1, dans lequel tous les groupes $R_1$ à $R_8$ représentent des groupes méthoxyéthyle ou des groupes éthoxyéthyle.

**7.** Composé suivant la revendication 1, dans lequel tous les groupes $R_1$ à $R_8$ représentent des groupes alcynyle.

**8.** Composé suivant la revendication 1, dans lequel tous les groupes $R_1$ à $R_8$ représentent des groupes propargyle.

**9.** Composé suivant l'une quelconque des revendications précédentes, dans lequel l'anion $X^-$ représente un ion bromure, iodure, perchlorate, nitrate, benzènesulfonate, p-toluènesulfonate, méthylsulfate, éthylsulfate, propylsulfate, tétrafluoroborate, tétraphénylborate, hexafluorophosphate, benzènesulfinate, acétate, trifluoracétate, propionacétate, benzoate, oxalate, succinate, malonate, oléate, stéarate, citrate, diphosphate monoacide, monophosphate diacide, pentachlorostannate, chlorosulfonate, fluorosulfonate, trifluorométhanesulfonate, hexafluoroarséniate, hexafluoroantiomonate, molybdénate, tungstate, titanate ou zirconate.

**10.** Support d'enregistrement optique comprenant un substrat et un film mince d'un colorant organique sur le substrat, film dans lequel est présent un composé absorbant le rayonnement infrarouge représenté par la formule (1') ou (2') :

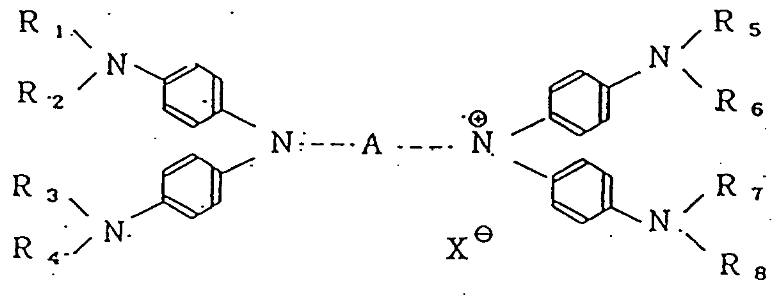

(1')

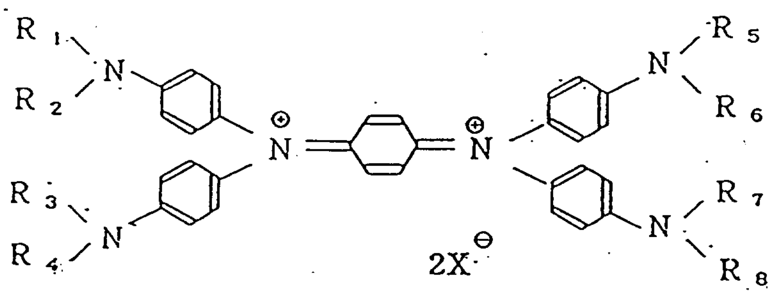

(2)

dans laquelle : A représente un groupe

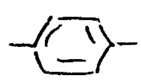

ou

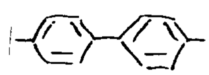

qui peut porter un halogène ou des groupes alkyle ou alkoxy comme substituants ;

$X^-$ représente un anion ; et

$R_1$ à $R_8$ représentent des substituants ayant 1 à 8 atomes de carbone, sous réserve que (a) au moins un des groupes $R_1$ à $R_8$ représente un groupe alkoxyalkyle, alcényle ou alcynyle, ou (b) au moins une association des groupes $R_1$ et $R_2$, $R_3$ et $R_4$, $R_5$ et $R_6$ ou $R_7$ et $R_8$, conjointement avec l'atome d'azote auquel ils sont fixés, représente un noyau, substitué ou non substitué, pyrrolidine, pipéridine, morpholine, tétrahydropyridine ou

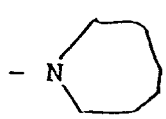,

et les autres substituants sont des groupes alkyle droits ou ramifiés.

**11.** Support d'enregistrement optique suivant la revendication 10, dans lequel au moins un des groupes $R_1$ à $R_8$ représente un groupe :
méthoxyméthyle, méthoxyéthyle, 2-méthoxyéthyle, 3-méthoxypropyle, 2-méthoxypropyle, 4-méthoxybutyle, 3-méthoxybutyle, 2-méthoxybutyle, 5-méthoxypentyle, 4-méthoxypentyle, 3-méthoxypentyle, 2-méthoxypentyle, 6-méthoxyhexyle, éthoxyméthyle, éthoxyéthyle, 2-éthoxyéthyle, 3-éthoxypropyle, 2-éthoxypropyle, 4-éthoxybutyle, 3-éthoxybutyle, 5-éthoxypentyle, 4-éthoxypentyle, 6-éthoxyhexyle, propoxyméthyle, 2-propoxyéthyle, 3-propoxypropyle, 4-propoxybutyle ou 5-propoxypentyle.

**12.** Support d'enregistrement optique suivant la revendication 10, dans lequel tous les groupes $R_1$ à $R_8$ représentent des groupes alkoxyalkyle.

**13.** Support d'enregistrement optique suivant la revendication 10, dans lequel tous les groupes $R_1$ à $R_8$ représentent des groupes méthoxyéthyle ou des groupes éthoxyéthyle.

**14.** Support d'enregistrement optique suivant la revendication 10, dans lequel au moins un des groupes $R_1$ à $R_8$ représente un groupe allyle, butényle, penténye, hexényle, hepténye, octényle, 2-méthylpropényle, pentadiényle ou hexadiényle.

**15.** Support d'enregistrement optique suivant la revendication 10, dans lequel tous les groupes $R_1$ à $R_8$ représentent des groupes alcényle.

**16.** Support d'enregistrement optique suivant la revendication 15, dans lequel tous les groupes $R_1$ à $R_8$ représentent des groupes allyle ou buténye.

**17.** Support d'enregistrement optique suivant la revendication 10, dans lequel au moins un groupe $R_1$ à $R_8$ représente un groupe propargyle, 3-butynyle, 4-pentynyle ou 5-hexynyle.

**18.** Support d'enregistrement optique suivant la revendication 10, dans lequel tous les groupes $R_1$ à $R_8$ représentent des groupes alcynyle.

**19.** Support d'enregistrement optique suivant la revendication 18, dans lequel tous les groupes $R_1$ à $R_8$ représentent des groupes propargyle.

**20.** Support d'enregistrement optique suivant la revendication 10, dans lequel tous les groupes $R_1$ et $R_2$, $R_3$ et $R_4$, $R_5$ et $R_6$ et $R_7$ et $R_8$, conjointement avec l'atome d'azote auquel ils sont fixés,représentent un noyau pyrrolidine, 2-méthylpyrrolidine, pipéridine, morpholine, tétrahydropyridine ou

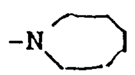 .

**21.** Support d'enregistrement optique suivant l'une quelconque des revendications 10 à 20, dans lequel l'anion $X^-$ est un ion bromure, iodure, perchlorate, nitrate, benzènesulfonate, p-toluènesulfonate, méthylsulfate, éthylsulfate, propylsulfate, tétrafluoroborate, tétraphénylborate, hexafluorophosphate, benzènesulfinate, acétate, trifluoracétate, propionacétate, benzoate, oxalate, succinate, malonate, oléate, stéarate, citrate, diphosphate monoacide, monophosphate diacide, pentachlorostannate, chlorosulfonate, fluorosulfonate, trifluorométhanesulfonate, hexafluoroarséniate, hexafluoroantiomoniate, molybdénate, tungstate, titanate ou zirconate.

**22.** Support d'enregistrement optique suivant l'une quelconque des revendications 10 à 21, dans lequel le film mince de colorant organique possède une épaisseur de 5 nm à 100 µm.

**23.** Support d'enregistrement optique suivant la revendication 22, dans lequel le film mince de colorant organique possède une épaisseur de 20 nm à 100 µm.

**24.** Support d'enregistrement optique suivant l'une quelconque des revendications 10 à 23, dans lequel une couche protectrice est formée sur le film mince de colorant organique.

**25.** Support d'enregistrement optique suivant l'une quelconque des revendications 10 à 24, dans lequel une couche intermédiaire est formée entre le film mince de colorant organique et le substrat.

**26.** Support d'enregistrement optique suivant l'une quelconque des revendications 10 à 25, dans lequel un composé de formule (1') ou (2') est présent en une quantité de 1 à 60 % en poids sur la base des matières solides totales dans le film mince de colorant organique.

**27.** Support d'enregistrement optique suivant l'une quelconque des revendications 10 à 25, dans lequel le composé de formule (1') ou (2') est présent en une quantité de 5 à 40 % en poids sur la base des matières solides totales dans le film mince de colorant organique.

**28.** Support d'enregistrement optique suivant l'une quelconque des revendications 10 à 25, dans lequel le composé de formule (1') ou (2') est présent en une quantité de 30 % en poids sur la base des matières solides totales dans le film mince de colorant organique.

**29.** Support d'enregistrement optique suivant l'une quelconque des revendications 10 à 28, comprenant en outre un autre composé qui absorbe les rayonnements du proche infrarouge.

**30.** Support d'enregistrement optique suivant la revendication 29, dans lequel l'autre composé absorbant le rayonnement infrarouge est un colorant du type polyméthine.

**31.** Support d'enregistrement optique suivant la revendication 29, dans lequel l'autre composé absorbant le rayonnement infrarouge est un colorant du type cyanine, mélocyanine, croconium, squarilium, azulénium, naphtoquinone, pyrilium ou phtalocyanine.

**32.** Support d'enregistrement optique suivant l'une quelconque des revendications 10 à 31, dans lequel le substrat est prérainuré pour l'enregistrement d'une information sur ce substrat ou la lecture d'une information à partir de ce substrat au moyen d'un laser à semiconducteurs.

**33.** Procédé de préparation d'un support d'enregistrement optique possédant un film mince d'un colorant organique sur un substrat, qui comprend la formation du film mince de colorant organique par application d'un solvant contenant un composé représenté par la formule (1') ou (2') telle que définie dans l'une quelconque des revendications 10 à 21.

**34.** Procédé d'enregistrement optique, qui comprend l'irradiation d'un support d'enregistrement optique comprenant un substrat et un film mince d'un colorant organique avec un faisceau laser pour former des puits sur ledit film mince de colorant organique, caractérisé en ce que ledit film mince de colorant organique contient un composé de formule (1') et/ou de formule (2') telle que définie dans l'une quelconque des revendications 10 à 21.

**35.** Procédé de reproduction optique, qui comprend l'éclairement d'un support d'enregistrement optique comprenant un substrat et un film mince d'un colorant organique avec un faisceau laser pour la lecture d'une information enregistrée sur ledit film mince de colorant organique sous forme de puits optiquement détectables par détection d'une variation optique de lumière réfléchie dudit faisceau laser par ledit film mince de colorant organique,

caractérisé en ce que ledit film mince de colorant organique contient un composé de formule (1') et/ou de formule (2') telle que définie dans l'une quelconque des revendications 10 à 21.